(19) **Europäisches Patentamt**
**European Patent Office**
**Office européen des brevets**

(11) **EP 2 028 368 B1**

(12) **EUROPÄISCHE PATENTSCHRIFT**

(45) Veröffentlichungstag und Bekanntmachung des Hinweises auf die Patenterteilung:
**03.04.2013   Patentblatt 2013/14**

(51) Int Cl.:
*F03D 7/00* *(2006.01)*     *F03D 7/02* *(2006.01)*
*H02J 3/38* *(2006.01)*

(21) Anmeldenummer: **08012747.5**

(22) Anmeldetag: **15.07.2008**

(54) **Windpark mit einer Vielzahl von Windenergieanlagen sowie Verfahren zum Betreiben des Windsparks**

Wind farm with a number of wind plants and method for operating a wind farm

Ferme à vent dotée d'un grand nombre d'éoliennes ainsi que procédé de fonctionnement d'une ferme à vent

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **02.08.2007   DE 102007036444**

(43) Veröffentlichungstag der Anmeldung:
**25.02.2009   Patentblatt 2009/09**

(73) Patentinhaber: **Nordex Energy GmbH**
**22848 Norderstedt (DE)**

(72) Erfinder:
• **Harms, Ulrich**
**22399 Hamburg (DE)**
• **Jurkat, Mark**
**22844 Norderstedt (DE)**

(74) Vertreter: **Schildberg, Peter et al**
**Hauck Patent- und Rechtsanwälte**
**Neuer Wall 50**
**20354 Hamburg (DE)**

(56) Entgegenhaltungen:
EP-A2- 2 254 217        WO-A2-2007/006565
US-A1- 2007 090 651     US-B1- 6 724 097

**Beschreibung**

Die vorliegende Erfindung betrifft einen Windpark mit einer Vielzahl von Windenergieanlagen, die jeweils eine Steuereinheit aufweisen, welche ansprechend auf einen empfangenen Sollwert für eine elektrische Größe die Windenergieanlage ansteuern und/oder einregeln, um einen den Sollwert entsprechenden Istwert bereitzustellen. Die Erfindung betrifft ebenfalls ein Verfahren zum Betreiben eines solchen Windparks.

Allgemein ist bekannt, die abgegebene Leistung eines Windparks durch die Vorgabe eines Sollwerts zu begrenzen. Eine solche Situation kann beispielsweise auftreten, wenn aufgrund bestimmter Umstände nicht die zur Verfügung stehende Leistung in das elektrische Netz eingespeist werden soll. Ein solcher gedrosselter Betrieb des Windparks macht es notwendig, mindestens für einige der Windenergieanlagen in dem Park ebenfalls einen gedrosselten Betrieb vorzusehen oder diese abzuschalten.

Aus US 6,724,097 B1 ist ein Verfahren zum Betreiben eines Windparks bekannt geworden, für den eine maximal zulässige Einspeiseleistung vorgegeben ist. Der Windpark besteht aus einer Vielzahl von Windenergieanlagen, wobei jede der Windenergieanlagen eine Ausgangsleistung und eine maximale Nennleistung besitzt. Eine Steuereinheit ist mit der Vielzahl von Windenergieanlagen verbunden, um die Ausgangsleistung von mindestens einer der Windenergieanlagen zu steuern. Die Steuereinheit kann die gesamte Ausgangsleistung von sämtlichen Windenergieanlagen bestimmen und ansprechend hierauf die Ausgangsleistung von mindestens einer der Windenergieanlagen derart steuern, dass die Gesamtausgangsleistung von allen Windenergieanlagen einen vorgegebenen maximal zulässigen Ausgangswert für den Windpark nicht überschreitet.

Aus WO 2007/006565 A2 ist eine Leistungsregelung eines Windparks bekannt geworden, bei der für eine Verbindungsstrecke des Windparks zu einem elektrischen Versorgungsnetz der Maximalstrom der Verbindungsstrecke bestimmt und eine bei der abgegebenen Leistung an das Energieversorgungsnetz verbleibende Stromreserve ermittelt wird. Aus der Stromreserve wird ein Korrekturwert zum Nachführen des Grenzwerts der an das Energieversorgungsnetz abgegebenen Leistung ermittelt.

Aus US 2007/0090651 A1 ist ein Verfahren zum Betreiben eines Windparks bekannt, bei dem für mindestens eine Windenergieanlage die Ausgangsleistung abhängig von der Netzfrequenz eingestellt oder geregelt wird.

Der Erfindung liegt die Aufgabe zugrunde, ein Verfahren zum Betreiben eines Windparks sowie einen solchen Windpark selbst bereitzustellen, bei dem mit einfachen Mitteln die Windenergieanlagen angesteuert werden können, um vorgegebene Sollwerte für den Windpark in kurzer Zeit stabil liefern zu können.

Erfindungsgemäß wird die Aufgabe durch ein Verfahren mit den Merkmalen aus Anspruch 1 und durch einen Windpark mit den Merkmalen aus Anspruch 15 gelöst.

Das erfindungsgemäße Verfahren betrifft das Betreiben eines Windparks mit einer Vielzahl von Windenergieanlagen. Jede Windenergieanlage besitzt eine Steuereinheit, die ansprechend auf einen empfangenen Sollwert für eine elektrische Größe die Windenergieanlage zur Bereitstellung des Sollwerts ansteuern und/oder einregeln kann. Ferner ist eine übergeordnete Steuerung vorgesehen, die einen maximalen zulässigen Wert für die elektrische Größe berechnet und/oder empfängt. Die übergeordnete Steuerung wird auch als Windparksteuerung und/oder Parkmanager bezeichnet. Die übergeordnete Steuerung kann beispielsweise aufgrund von elektrischen Messungen an dem Netzanschlußpunkt selbst den maximal zulässigen Wert für die elektrische Größe berechnen. Der maximal zulässige Wert der elektrischen Größe kann auch als konstanter Wert oder als zeitlicher Ablaufplan in der übergeordneten Steuerung hinterlegt sein. Alternativ oder unterstützend kann die übergeordnete Steuerung auch den maximal zulässigen Wert für die elektrische Größe empfangen. Die übergeordnete Steuerung ermittelt für jede Windenergieanlage einen Sollwert für eine elektrische Größe und übermittelt diesen an die Steuerung der Windenergieanlage. Erfindungsgemäß bestimmt die übergeordnete Steuerung jeden Sollwert für die Windenergieanlage abhängig von dem aktuellen maximal möglichen Wert, den die Windenergieanlage erzeugen kann. Es erfolgt also eine Verteilung der insgesamt durch den Windpark bereitzustellenden Größe abhängig davon, was jede einzelne Windenergieanlage aktuell bereitstellen kann. Der aktuell maximal mögliche Wert kann sich auf einen maximal möglichen Wert in einem Zeitpunkt oder während einer bestimmten Zeitdauer beziehen. Der Vorteil dieses Verfahrens ist, daß eine Verteilung der Sollwerte innerhalb des Windparks vorgenommen wird, die nicht nur abhängig von der Anzahl der Windenergieanlagen im Windpark ist, sondern gezielt aktuelle Besonderheiten der Windenergieanlagen in dem Windpark berücksichtigen kann.

Erfindungsgemäß wird der Sollwert für eine Windenergieanlage von der übergeordneten Steuerung bestimmt als der maximal mögliche Wert des Windparks, dividiert durch die Anzahl der Windenergieanlagen in dem Windpark, gewichtet mit dem Quotienten aus dem aktuell maximal möglichen Wert der betreffenden Windenergieanlage und dem Mittelwert der aktuell maximal möglichen Werte aller Windenergieanlagen. Die Sollwertverteilung erfolgt somit rein logisch gesehen in zwei Schritten. In einem ersten Schritt wird der Windenergieanlage als Sollwert diejenige Größe zugeordnet, die sich bei einer gleichmäßigen Aufteilung auf alle Windenergieanlagen ergibt. In einem zweiten Schritt wird die so ermittelte Sollwertvorgabe für die Windenergieanlage gewichtet. Die Gewichtung erfolgt hierbei über den aktuellen Wert der maximal möglich ist für die Windenergieanlage, dividiert durch den Durchschnittswert der aktuell maximal möglichen Werte aller Windenergieanlagen. In anderer Form ausgedrückt bedeutet das, daß für die Windenergieanlage i (i = 1,..., N) der Sollwert $\hat{B}_{Soll}^{i}$ sich ergibt als:

$$\hat{B}_{Soll}^{i} = B_{Soll,WA}^{i} * \frac{B_{max}^{i}}{\overline{B}_{max}},$$

wobei $B_{Soll,WA}$ die Größe ist, die sich aus Division des für den Windpark vorgegebenen Sollwerts durch die Anzahl N der Windenergieanlagen ergibt. $B_{max}^{i}$ gibt den aktuell maximal möglichen Wert der i-ten Windenergieanlage an und $\overline{B}_{max}$ ist der Mittelwert der aktuell maximal möglichen Werte der elektrischen Größe der Windenergieanlagen. Beispielsweise berechnet sich der Mittelwert als:

$$\overline{B}_{max} = \frac{1}{N} \sum_{i=1}^{N} B_{max}^{i}$$

Aus der Gewichtung $B_{max}^{i}$ / $\overline{B}_{max}$ wird direkt deutlich, daß einer Windenergieanlage, die einen überdurchschnittlich großen Wert zur Verfügung stellen kann, eine höhere Sollwertvorgabe erhält als eine Windenergieanlage, die nur einen unterdurchschnittlichen Wert zur Verfügung stellen kann.

Eine Besonderheit an dem Verfahren ist, daß dieses auch ohne besondere Vorkehrung für eine abgeschaltete Windenergieanlage eingesetzt werden kann, wenn dieser der maximal mögliche Wert von Null zugeordnet wird. Eine weitere Besonderheit des Verfahrens ist, daß die Sollwerte für jede Windenergieanlage berechnet werden, wenn der aktuell maximal mögliche Wert aller Windenergieanlagen kleiner oder gleich dem aktuell maximal zulässigen Wert des Windparks ist. Es erfolgt also ebenfalls eine Verteilung durch die Zuweisung von Sollwerten, selbst dann wenn der Windpark nicht den aktuell maximal möglichen Wert des Windparks ausschöpft. Indem auch in diesem Zustand den einzelnen Windenergieanlagen Sollwerte vorgegeben werden, kann sichergestellt werden, daß, beispielsweise bei einer Erhöhung der Windgeschwindigkeit der Windpark ohne zu große Steuer- oder Regeleingriffe schnell auf den maximal zulässigen Sollwert des Windparks begrenzt werden kann.

In einer bevorzugten Weiterführung des erfindungsgemäßen Verfahrens ermittelt die übergeordnete Steuerung jeden Sollwert für eine der Windenergieanlagen abhängig von dem aktuell maximal möglichen Wert sämtlicher Windenergieanlagen in dem Windpark und dem vorgegebenen zulässigen Wert für den Windpark für die elektrische Größe. Der besondere Vorteil dieses Verfahrensschritts liegt darin, daß nicht nur der aktuell maximal mögliche Wert einer einzelnen Anlage bei der Verteilung der Sollwerte berücksichtigt wird, sondern von sämtlichen Windenergieanlagen des Windparks die aktuell maximal möglichen Werte bei der Sollwertverteilung berücksichtigt werden.

In einer bevorzugten Ausgestaltung werden die Sollwerte für jede Windenergieanlage ebenfalls berechnet, wenn der aktuell maximal mögliche Wert aller Windenergieanlagen größer oder gleich dem aktuell maximal zulässigen Wert des Windparks ist. Dies ist der Fall, in dem eine Begrenzung der elektrischen Größe für einzelne Windenergieanlagen erfolgt, um nicht den maximal zulässigen Wert zu überschreiten.

In einer bevorzugten Ausgestaltung des erfindungsgemäßen Verfahrens wird, wenn der Sollwert einer der Windenergieanlagen einen Grenzwert überschreitet, der Sollwert auf diesen Grenzwert begrenzt. Gerade in der Situation, in der der für den Windpark vorgegebene Sollwert größer ist als die Summe der Werte, die die einzelnen Windenergieanlagen bereitstellen können, kann der Fall auftreten, daß einer Windenergieanlage ein Sollwert für mehr als 100 Prozent bezogen auf den maximal möglichen Wert zugewiesen wird. In diesem Fall wird der der Steuerung der Windenergieanlage vorgegebene Sollwert auf einen Grenzwert beschränkt. Bevorzugt kann in dieser Situation der nicht dieser Windenergieanlage zugewiesene Anteil auf die übrigen Windenergieanlagen verteilt werden. Für die Verteilung der Sollwerte kann wieder das erfindungsgemäße Verfahren eingesetzt werden, wobei die Windenergieanlage, deren Sollwert bereits auf den Grenzwert gesetzt wurde, bei der Verteilung dann nicht berücksichtigt wird.

Erfindungsgemäß ist für jede der Windenergieanlagen eine Kennlinie vorgesehen, in der abhängig von einer oder mehreren externen Größen der maximal mögliche Wert der zugeordneten Windenergieanlage abgelegt ist. Bei der externen Größe kann es sich beispielsweise um die Windgeschwindigkeit und/oder die Windrichtung handeln. Die Kennlinie gibt dann für eine vorgegebene Windgeschwindigkeit an, welche Größe die Windenergieanlage bei dieser Windgeschwindigkeit maximal bereitstellen kann. Ausgehend von den aus der Kennlinie ermittelten maximal möglichen Werten erfolgt dann die Zuordnung der Sollwerte.

Bei der elektrischen Größe, die bei dem erfindungsgemäßen Verfahren in dem Windpark verteilt wird, kann es sich um die Wirkleistung und/oder den Wirkstrom der Windenergieanlage handeln. Alternativ ist auch möglich, als elektrische Größe die Blindleistung und/oder den Blindstrom und/oder die Scheinleistung und/oder den Scheinstrom und/oder einen Phasenwinkel und/oder einen Leistungsfaktor anzusetzen.

In einer bevorzugten Ausgestaltung kann für einige oder sämtliche Anlagen ein einheitlicher oder individueller minimal möglicher Wert als Mindestsollwert vorgegeben sein. Der Mindestsollwert wird immer dann als Sollwert für die entsprechende Windenergieanlage verwendet, wenn der von der übergeordneten Steuerung bestimmte Sollwert kleiner als der Mindestsollwert ist. Dies stellt sicher, daß einer Windenergieanlage nicht ein zu kleiner Sollwert zugeordnet wird, der bei dieser Windenergieanlage beispielsweise zu einem erhöhten Verschleiß führen könnte. Zusätzlich kann vorgesehen sein, daß, wenn der Sollwert für mindestens eine Windenergieanlage auf den Mindestsollwert begrenzt ist, der Sollwert mindestens einer der anderen Windenergieanlagen verringert wird. Zweckmäßigerweise bleibt der verringerte Sollwert erhalten, solange der Mindestsollwert an der mindestens einen Windenergieanlage anliegt.

Die erfindungsgemäße Aufgabe wird ebenfalls durch einen Windpark mit den Merkmalen gemäß Anspruch 16 gelöst.

Der erfindungsgemäße Windpark besitzt eine Vielzahl von Windenergieanlagen, die jeweils eine Steuereinheit aufweisen, um ansprechend auf einen empfangenen Sollwert für eine elektrische Größe die Windenergieanlage zur Erreichung des Sollwerts anzusteuern und/oder einzuregeln. In dem Windpark ist eine übergeordnete Steuerung vorgesehen, die einen maximal zulässigen Wert für die elektrische Größe, die der Windpark generieren darf, speichern kann. Der maximal zulässige Wert, der in der übergeordneten Steuerung gespeichert werden kann, kann von der übergeordneten Steuerung berechnet oder empfangen werden, Auch kann der maximal zulässige Wert der elektrischen Größe als konstanter Wert oder als zeitlicher Ablaufplan in der übergeordneten Steuerung hinterlegt sein. Die übergeordnete Steuerung kann zusätzlich für jede Windenergieanlage einen Sollwert für die elektrische Größe ermitteln und kann diesen ermittelten Sollwert an die Steuerung der Windenergieanlage übermitteln. Die übergeordnete Steuerung kann für jede Windenergieanlage einen Sollwert bestimmen, der abhängig von den aktuell maximal möglichen Werten der Windenergieanlagen in dem Windpark ist. Ein mit der erfindungsgemäßen übergeordneten Steuerung ausgerüsteter Windpark kann ohne große Verzögerung und in kurzer Zeit auf Sollwertvorgaben für den Windpark reagieren.

Erfindungsgemäß kann die übergeordnete Steuerung den Sollwert für eine Windenergieanlage bestimmen als den aktuell maximal möglichen Wert des Windparks, dividiert durch die Anzahl der Windenergieanlagen und gewichtet mit dem Quotienten aus dem aktuell maximal möglichen Wert der betreffenden Windenergieanlage und dem Mittelwert aller aktuell maximal möglichen Werte der Windenergieanlagen. Eine derart ausgebildete übergeordnete Steuerung kann sicherstellen, daß sowohl in dem Fall, in dem die Sollwertvorgabe für den Windpark oberhalb des Istwerts für die von dem Windpark erzeugte elektrische Größe als auch in dem Fall, wo die durch den Windpark bereitgestellte Größe nicht an den Sollwert für den Windpark heranreicht, jeder Windenergieanlage ein individueller Sollwert zugewiesen wird, der berücksichtigt, welchen Beitrag die Windenergieanlage zur Erreichung des Sollwerts für den Windpark leisten kann.

In einer bevorzugten Weiterbildung des Windparks kann die übergeordnete Steuerung jeden Sollwert von einer der Windenergieanlagen abhängig von den maximal möglichen Werten aller Windenergieanlagen in dem Windpark und dem vorgegebenen zulässigen Wert für die elektrische Größe bestimmen.

In einer bevorzugten Ausgestaltung ist entweder in der übergeordneten Steuerung und/oder in den Steuerungen der Windenergieanlagen jeweils eine Kennlinie vorgesehen, in der abhängig von einem oder mehreren externen Größen der maximal mögliche Wert der zugeordneten Windenergieanlage abgelegt werden kann. Eine solche Kennlinie bietet die Möglichkeit, anhand der abgelegten Werte einer externen Größe, wie beispielsweise der Windgeschwindigkeit und/oder der Windrichtung, den maximal möglichen Wert der zugeordneten Windenergieanlage zu bestimmen.

Bevorzugt ist als elektrische Größe, für die im Windpark ein Sollwert vorgegeben werden kann, die Wirkleistung vorgesehen. Alternativ ist es auch möglich, bei der elektrischen Größe auf die Scheinleistung, die Blindleistung und/oder den Blindstrom oder einen Phasenwinkel und/oder Leistungswinkel abzustellen.

In einer bevorzugten Weiterbildung des Windparks können einzelnen Windenergieanlagen oder sämtlichen Windenergieanlagen Mindestsollwerte vorgegeben werden. Ein Mindestsollwert dient beispielsweise dazu, einen erhöhten Verschleiß der Windenergieanlage zu vermeiden. Die Mindestsollwerte werden von der übergeordneten Steuerung eingehalten und ein etwaiger Sollwert, der kleiner als der Mindestsollwert ist, wird auf den Mindestsollwert gesetzt. In diesem Fall kann zusätzlich der Sollwert einer der anderen Windenergieanlagen verringert werden, bevorzugt solange wie ein Mindestsollwert vorgegeben ist.

Die vorliegende Erfindung wird nachfolgend an zwei Beispielen näher erläutert.

Es zeigt:

Fig. 1 die Leistungsverteilung von drei Windenergieanlagen bei einer deutlichen Leistungsreduzierung,

Fig. 2    ein Zwischenergebnis bei der Leistungsverteilung, bei dem der aktuelle Sollwert einer Windenergieanlage über dem Grenzwert dieser Windenergieanlage liegt, und

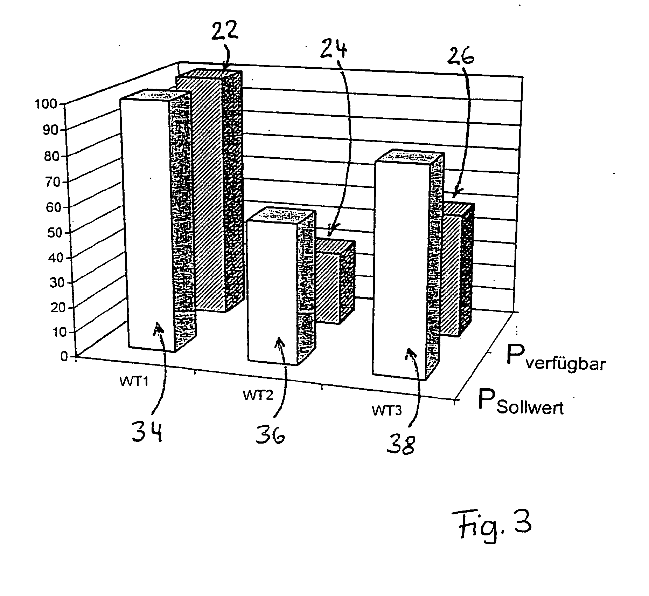

Fig. 3    die Leistungsverteilung für einen Windpark mit einer moderaten Leistungsreduzierung, wobei eine Windenergieanlage auf einen Grenzwert begrenzt wurde.

Für das Ausführungsbeispiel sei ein Windpark mit drei Windenergieanlagen WT1, WT2 und WT3 angenommen, die die produzierte Wirkleistung über ein Leistungskabel an ein Übertragungsnetz abgeben. Im regulären Zustand wird ein solcher Windpark ohne Leistungsbegrenzung betrieben. Es können jedoch Umstände auftreten, in denen nicht die gesamte mögliche Wirkleistung der Windturbine in das Übertragungsnetz eingespeist werden darf, so daß der Windpark gedrosselt betrieben werden muß. Es sei angenommen, daß eine Windparksteuerung hierzu vorgesehen ist.

Die Windparksteuerung kann als eine Steuereinheit vorliegen. Die Funktion der Windparksteuerung kann auch durch das Zusammenspiel mehrerer verteilter Steuerungen realisiert werden.

In dem Fall, daß die Leistung des Windparks zu reduzieren ist, empfängt die Windparksteuerung eine Größe, die angibt, welche Leistung in das Übertragungsnetz aktuell insgesamt eingespeist werden darf. Der Einfachheit halber sei nachfolgend angenommen, daß das Signal zur Leistungsbegrenzung sich als eine Prozentzahl darstellt, wobei der Leistungswert sich dann durch die Anwendung der Prozentzahl auf die Nennleistung ergibt. Bei einer Nennleistung des Windparks von 6,28 MW bedeutet eine Leistungsreduzierung auf 80 Prozent, daß der Windpark 6,28 x 0,8 MW = 5,02 MW maximal einspeisen darf.

Neben dem angesprochenen Fall, daß dem Windpark von extern ein Sollwert vorgegeben wird, kann auch der Fall auftreten, daß die Windparksteuerung aufgrund von im Netz aufgetretenen Abweichungen bei regulären Größen selbständig einen Sollwert generiert oder ein vorbestimmter Sollwert in der Windparksteuerung hinterlegt ist.

Ferner ist für jede der Windenergieanlagen eine Kennlinie vorgesehen, die die von der Windenergieanlage erzeugbare Leistung über der Windgeschwindigkeit angibt. Dies bedeutet, daß zu einer aktuell gemessenen Windgeschwindigkeit stets auch die maximal mögliche Leistung der Windenergieanlage berechnet werden kann. Diese Leistung sei nachfolgend als $P_{\max}^i$ (i = 1, 2, 3) bezeichnet.

Bei der Bezeichnung Maximalwert wird nicht unbedingt auf einen Spitzenwert der Anlage abgestellt, sondern der Maximalwert bezeichnet einen über ein Zeitintervall gemittelten Wert, der auch kurzzeitig über- oder unterschritten werden kann.

Beispiel 1:

Es sei angenommen, daß die bereitzustellende Wirkleistung des Windparks auf 30 Prozent reduziert werden soll. Ferner sei angenommen, daß für die Windenergieanlage 1 die maximal verfügbare Leistung 100 Prozent betrage, die Windverhältnisse also ausreichend sind, um die Anlage mit Nennleistung zu betreiben. Windenergieanlagen 2 und 3 können im Gegensatz dazu nur 30 bzw. 50 Prozent ihrer Nennleistung bereitstellen.

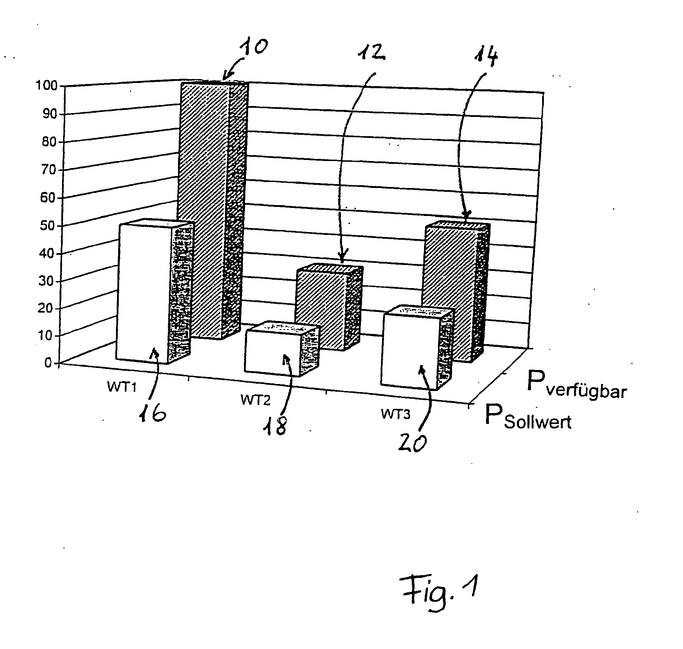

In Fig. 1 ist die von den Windenergieanlagen WT 1 bis WT3 maximal verfügbare Leistung in der hinteren Säulenreihe dargestellt, wobei Säule 10 einen Wert von 100 Prozent anzeigt, Säule 12 einen Wert von 30 Prozent und Säule 14 einen Wert von 50 Prozent darstellt. In einem nächsten Schritt wird nun der Mittelwert der maximal möglichen Leistung pro Anlage berechnet. Dieser ergibt sich in dem Beispiel wie folgt:

$$\overline{P}_{\max} = \frac{(100\% + 30\% + 50\%)}{3} = 60\%$$

Diese Größe bezeichnet den Wert, den die einzelnen Windenergieanlagen im Durchschnitt in der Lage sind, bereitzustellen. Bei dieser Berechnung wurde angenommen, daß jede Windenergieanlage in dem Windpark die genau gleiche Nennleistung hat. Sollte ein heterogener Windpark vorliegen, bei dem die einzelnen Windenergieanlagen eine unterschiedliche Nennleistung besitzen, so ist bei der Mittelwertbildung für die durchschnittlich mögliche einzuspeisende Leistung jeweils die Nennleistung zu berücksichtigen.

Jeder Windenergieanlage WT1,...,WT3 werden nun nachfolgend Sollwerte wie folgt zugewiesen:

$$\hat{P}_{\max}^{1} = 30\% * \frac{100\%}{60\%} = 50\%$$

$$\hat{P}_{\max}^{2} = 30\% * \frac{30\%}{60\%} = 15\%$$

$$\hat{P}_{\max}^{3} = 30\% * \frac{50\%}{60\%} = 25\%$$

In dem Beispiel wird der Sollwert, auf den die Leistung zu begrenzen ist, also der 30-%-Wert, jeweils gewichtet mit dem aktuell maximal möglichen Leistungswert der Windenergieanlage, dividiert durch den durchschnittlichen aktuell möglichen Leistungswert pro Windenergieanlage.

Insgesamt ist an den vorliegenden Ergebnissen zur Leistungsverteilung deutlich zu erkennen, daß jede der Anlage mit einem gedrosselten Wert betrieben wird und damit problemlos auf fluktuierende Windwerte reagieren kann.

Beispiel 2:

In dem nachfolgenden Beispiel sei angenommen, daß die Sollwertbegrenzung auf 80 Prozent erfolgen soll. Ferner sei wieder angenommen, daß die einzelnen Windenergieanlagen als mögliche Leistungswerte wieder 100 Prozent, 30 Prozent und 50 Prozent besitzen. Wendet man wieder das Berechnungsschema aus Beispiel 1 an, so ergeben sich folgende Werte für die Sollwertvorgaben der einzelnen Windenergieanlagen:

$$\hat{P}_{\max}^{1} = 80\% * \frac{100\%}{60\%} = 133\%$$

$$\hat{P}_{\max}^{2} = 80\% * \frac{30\%}{60\%} = 40\%$$

$$\hat{P}_{\max}^{3} = 80\% * \frac{50\%}{60\%} = 66\%$$

An dem Beispiel wird deutlich, daß bei dieser moderaten Leistungsbegrenzung und der verfügbaren Leistung des Windparks sich Sollwerte für die einzelnen Windenergieanlagen ergeben, die nicht bereitgestellt werden können.

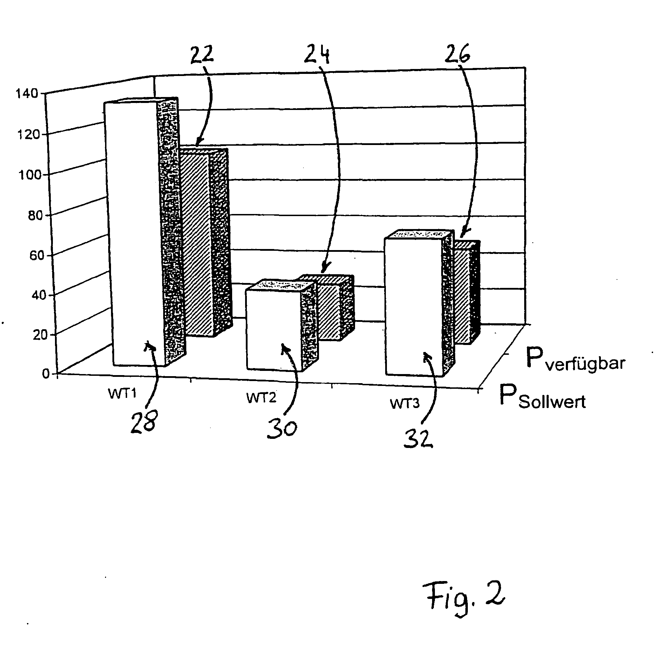

Bei dem erfindungsgemäßen Verfahren wird der Sollwert für die Windenergieanlage 1 auf einen Grenzwert festgesetzt. Wie in Fig. 2 dargestellt, ist die verfügbare Leistung in der Windenergieanlage 1 Säule 22, die verfügbare Leistung in der Windenergieanlage 2 Säule 24 und die verfügbare Leistung der Windenergieanlage 3 Säule 26. Die Säulen 22 bis 26 sind jeweils kleiner als die zugehörigen Säulen 28 bis 32, die die notwendigen Sollwerte für die Windenergieanlagen zeigen. Deutlich zu erkennen ist in Fig. 2 auch, daß Windenergieanlage 1 mit Säule 28 einen Sollwert von 133 Prozent erhält.

Tritt die Situation auf, daß einer der vorgegebenen Sollwerte größer als ein Grenzwert ist, so wird der entsprechende Sollwert auf den Grenzwert begrenzt. Wie in Fig. 2 dargestellt, sei in dem Beispiel der Grenzwert auf 105 Prozent gesetzt (Säule 34). Die verbleibende Leistung 133 % - 105 % = 28 % wird gleichmäßig auf die verbleibenden Anlagen (Säule 36, 38) verteilt. Es ergeben sich somit die folgenden Sollwerte:

$$\hat{P}_{\mathrm{max}}^{1} = 105\%$$

$$\hat{P}_{\mathrm{max}}^{2} = 80\% * \frac{30\%}{60\%} + (133\% - 105\%)/2 = 54\%$$

$$\hat{P}_{\mathrm{max}}^{3} = 80\% * \frac{50\%}{60\%} + (133\% - 105\%)/2 = 71\%$$

Bei der Verteilung der überschüssigen Leistung wurde diese gleichmäßig auf die verbleibenden Anlagen verteilt. Grundsätzlich ist es auch möglich, die überschüssige Leistung wieder gewichtet auf die verbleibenden Anlagen zu verteilen.

Der Grenzwert von 105 Prozent wurde in dem Beispiel willkürlich gewählt. Wichtig für den Betrieb der Windenergieanlage ist bei der Wahl des Grenzwerts, daß die Steuerung der Windenergieanlage zwischen dem Betrieb bei Nennleistung (=100 %) und dem Betrieb mit dem Grenzwert unterscheiden kann.

In dem vorliegenden Beispiel ergibt sich eine endgültige Sollwertverteilung für die Windenergieanlagen des Windparks, die es ermöglicht, schnell und flexibel auf Windschwankungen zu reagieren.

Beim Betrieb des Windparks können Situationen auftreten, in denen einzelnen Windenergieanlagen ein Mindestsollwert vorgegeben ist. Der Mindestsollwert schreibt vor, daß der Anlage beim Betrieb kein niedrigerer Sollwert vorgegeben werden kann. Um diese Randbedingungen zu setzen, kann eine nachgelagerte Sollwertadaptierung vorgesehen sein, die nachfolgend an einem Beispiel erläutert wird:

Für einen Windpark mit drei Windenergieanlagen soll die Sollwertbegrenzung auf 9,33 % erfolgen. Die einzelnen Windenergieanlagen besitzen als aktuell mögliche Leistungswerte 12 %, 30 % und 36 %. Den Anlagen ist jeweils ein Mindestsollwert zugeordnet, der bei der Leistungsverteilung nicht unterschritten werden sollte. Der Mindestsollwert für die Anlagen betrage 16%, 4% und 4%.

Nach der bereits vorstehend diskutierten Sollwertverteilung ergeben sich mit

$$\overline{P}_{\mathrm{max}} = \frac{(12\% + 30\% + 36\%)}{3} = 26\%$$ die folgenden Werte:

$$\hat{P}_{\mathrm{max}}^{1} = 9,33\% * \frac{12\%}{26\%} = 4,31\%$$

$$\hat{P}_{\mathrm{max}}^{2} = 9,33\% * \frac{30\%}{26\%} = 10,77\%$$

$$\hat{P}_{\mathrm{max}}^{3} = 9,33\% * \frac{36\%}{26\%} = 12,92\%$$

Wie deutlich zu erkennen, wird der Windenergieanlage 1 ein Sollwert zugeordnet, der kleiner als der Mindestsollwert von 16 % ist. Wie bereits bei der Begrenzung auf einen Maximalwert wird auch bei der Begrenzung auf einen Mindestsollwert nun eine Umverteilung der Sollwerte vorgenommen. Hierzu wird zunächst die Differenz zwischen aktuell maximal möglichem Wert und dem zunächst berechneten Sollwert $\hat{P}_{\max}^{1}$ bestimmt. Dieser Wert ergibt sich hier zu 12 % - 4,31 % = 7,69 %. Wie bereits bei der Beschränkung auf einen maximalen Sollwert wird hier der Sollwert auf den Mindestsollwert gesetzt und die entsprechende Differenz von anderen Sollwerten abgezogen, sofern diese über ihren Mindestsollwerten liegen. Fällt nach der Subtraktion einer der korrigierten Sollwerte unter den entsprechenden Mindestsollwert, so wird das Verfahren mit den verbleibenden Windenergieanlagen wiederholt. Nach dieser Umverteilung ergeben sich folgende Werte:

$$\hat{P}_{\max}^{1} = 16\%$$

$$\hat{P}_{\max}^{2} = 10,77\% - \frac{12\% - 4,31\%}{2} = 6,92\%$$

$$\hat{P}_{\max}^{3} = 12,92\% - \frac{12\% - 4,31\%}{2} = 9,08\%$$

Bei der Umverteilung der Sollwerte wurden diese gleichmäßig auf die Anlagen 2 und 3 aufgeteilt. Es ist alternativ auch möglich, diese gewichtet aufzuteilen. Ferner ist zu bemerken, daß anders als bei Verteilung der Maximalwerte hier nur die Differenz zu dem aktuell maximal möglichen Leistungswert der ersten Anlage abgezogen wird, selbst wenn der Mindestsollwert mit 16 % größer als der aktuell maximal mögliche Wert mit 12 % ist.

Das vorstehend beschriebene Verfahren zur Aufteilung der Leistung bei Unterschreiten des Mindestsollwerts kann durchgeführt werden, wenn die insgesamt mögliche Leistung größer als die Summe der Sollwerte ist, solange bis die Summe der Sollwerte kleiner als die Summe der Mindestleistungen der einzelnen Windenergieanlagen ist.

**Patentansprüche**

1. Verfahren zum Betreiben eines Windparks mit einer Vielzahl von Windenergieanlagen, die jeweils eine Steuereinheit aufweisen, die ansprechend auf einen empfangenen Sollwert für eine elektrische Größe die Windenergieanlage ansteuern und/oder einregeln kann, wobei das Verfahren folgende Schritte aufweist:

   - eine übergeordnete Steuerung berechnet und/oder empfängt einen aktuell maximal zulässigen Wert für die elektrische Größe, die der Windpark bereitstellen darf,
   - die übergeordnete Steuerung ermittelt für jede Windenergieanlage einen Sollwert für die elektrische Größe und übermittelt diesen an die Windenergieanlagen,
   **dadurch gekennzeichnet, daß**
   - die übergeordnete Steuerung den Sollwert für jede der Windenergieanlagen abhängig von aktuell maximal möglichen Werten aller Windenergieanlagen bestimmt
   - wobei der Sollwert für eine Windenergieanlage als der aktuell maximal mögliche Wert des Windparks, dividiert durch die Anzahl der Windenergieanlagen, gewichtet mit dem Quotienten aus aktuell maximal möglichem Wert der Windenergieanlage und dem Mittelwert der aktuell maximal möglichen Werte aller Windenergieanlagen bestimmt wird.

2. Verfahren nach Anspruch 1, **dadurch gekennzeichnet, daß** die übergeordnete Steuerung jeden Sollwert einer der Windenergieanlagen abhängig von dem aktuell maximal möglichen Wert der Windenergieanlage und dem vorgegebenen aktuell maximal zulässigen Wert für die elektrische Größe bestimmt.

3. Verfahren nach Anspruch 1 oder 2, **dadurch gekennzeichnet, daß** die Sollwerte für jede Windenergieanlage berechnet werden, wenn der aktuell maximal mögliche Wert des Windparks kleiner oder gleich dem aktuell maximal zulässigen Wert des Windparks ist.

**4.** Verfahren nach einem der Ansprüche 1 bis 3, **dadurch gekennzeichnet, daß** die Sollwerte für jede Windenergieanlage berechnet werden, wenn der aktuell maximal mögliche Wert aller Windenergieanlagen größer oder gleich dem maximal zulässigen Wert ist.

**5.** Verfahren nach einem der Ansprüche 1 bis 4, **dadurch gekennzeichnet, daß**, wenn der Sollwert einer der Windenergieanlagen einen Grenzwert dieser Windenergieanlage überschreitet, der Sollwert für diese Windenergieanlage auf den Grenzwert dieser Windenergieanlage beschränkt wird.

**6.** Verfahren nach Anspruch 5, **dadurch gekennzeichnet, daß** die Differenz zwischen nicht beschränktem Sollwert und Grenzwert auf eine oder mehrere verbleibende Windenergieanlagen verteilt wird.

**7.** Verfahren nach einem der Ansprüche 1 bis 6, **dadurch gekennzeichnet, daß** für jede der Windenergieanlagen eine Kennlinie vorgesehen ist, in der abhängig von einer oder mehreren externen Größen der maximal mögliche Wert der Windenergieanlage oder einer Gruppe von Windenergieanlagen abgelegt ist.

**8.** Verfahren nach einem der Ansprüche 1 bis 7, **dadurch gekennzeichnet, daß** als externe Größe die Windgeschwindigkeit und/oder die Windrichtung vorgesehen ist.

**9.** Verfahren nach einem der Ansprüche 1 bis 8, **dadurch gekennzeichnet, daß** die elektrische Größe die Wirkleistung und/oder den Wirkstrom der Windenergieanlage darstellt.

**10.** Verfahren nach einem der Ansprüche 1 bis 8, **dadurch gekennzeichnet, daß** die elektrische Größe die Blindleistung und/oder den Blindstrom darstellt.

**11.** Verfahren nach einem der Ansprüche 1 bis 8, **dadurch gekennzeichnet, daß** die elektrische Größe den Phasenwinkel und/oder den Leistungsfaktor darstellt.

**12.** Verfahren nach einem der Ansprüche 1 bis 8, **dadurch gekennzeichnet, daß** die elektrische Größe die Scheinleistung und/oder den Scheinstrom darstellt.

**13.** Verfahren nach einem der Ansprüche 1 bis 12, **dadurch gekennzeichnet, daß** mindestens einer der Windenergieanlagen ein minimal möglicher Wert als Sollwert zugeordnet wird, wenn der von der übergeordneten Steuerung bestimmte Sollwert kleiner als der minimal mögliche Wert der mindestens einen der Windenergieanlagen ist.

**14.** Verfahren nach Anspruch 13, **dadurch gekennzeichnet, daß**, wenn der Sollwert für mindestens eine Windenergieanlage auf den minimal möglichen Wert begrenzt ist, der Sollwert mindestens einer der anderen Windenergieanlagen verringert wird.

**15.** Windpark mit einer Vielzahl von Windenergieanlagen, die jeweils eine Steuereinheit aufweisen, die ansprechend auf einen empfangenen Sollwert für eine elektrische Größe die Windenergieanlage ansteuern und/oder einregeln kann, wobei der Windpark mindestens eine übergeordnete Steuerung aufweist, die einen maximal zulässigen Wert für die vom Windpark bereitgestellte elektrische Größe speichern kann, die übergeordnete Steuerung kann für jede Windenergieanlage einen Sollwert für die elektrische Größe ermitteln und an die Windenergieanlage übermitteln, **dadurch gekennzeichnet, daß**

die übergeordnete Steuerung jeden Sollwert für die Windenergieanlage abhängig von aktuell maximal möglichen Werten der Windenergieanlagen bestimmt, wobei die übergeordnete Steuerung den Sollwert für eine Windenergieanlage bestimmen kann als einen aktuell maximal möglichen Wert des Windparks, dividiert durch die Anzahl der Windenergieanlagen, gewichtet mit einem Quotienten aus dem aktuell maximal möglichen Wert der Windenergieanlage und dem Mittelwert aller aktuell maximal möglichen Werte der Windenergieanlagen.

**16.** Windpark nach Anspruch 15, **dadurch gekennzeichnet, daß** die übergeordnete Steuerung jedem Sollwert einer der Windenergieanlagen abhängig von dem maximal möglichen Wert der Windenergieanlage und dem vorgegebenen zulässigen Wert für die elektrische Größe bestimmen kann.

**17.** Windpark nach Anspruch 15 oder 16, **dadurch gekennzeichnet, daß** für jede der Windenergieanlagen eine Kennlinie vorgesehen ist, in der abhängig von einer oder mehreren externen Größen der maximal mögliche Wert der elektrischen Größe der Windenergieanlage oder einer Gruppe von Windenergieanlagen abgelegt werden kann.

18. Windpark nach einem der Ansprüche 15 bis 17, **dadurch gekennzeichnet, daß** als externe Größe die Windgeschwindigkeit und/oder die Windrichtung genutzt wird.

19. Windpark nach einem der Ansprüche 15 bis 18, **dadurch gekennzeichnet, daß** die elektrische Größe die Wirkleistung und/oder den Wirkstrom der Windenergieanlage darstellt.

20. Windpark nach einem der Ansprüche 15 bis 18, **dadurch gekennzeichnet, daß** die elektrische Größe die Blindleistung und/oder Blindstrom darstellt.

21. Windpark nach einem der Ansprüche 15 bis 18, **dadurch gekennzeichnet, daß** die elektrische Größe den Phasenwinkel und/oder den Leistungsfaktor darstellt.

22. Windpark nach einem der Ansprüche 15 bis 18, **dadurch gekennzeichnet, daß** die elektrische Größe die Scheinleistung und/oder den Scheinstrom darstellt.

23. Windpark nach einem der Ansprüche 15 bis 22, **dadurch gekennzeichnet, daß** mindestens einer der Windenergieanlagen ein minimal möglicher Wert als Sollwert zugeordnet ist, wenn der von der übergeordneten Steuerung bestimmte Sollwert kleiner als der minimal mögliche Wert der mindestens einen der Windenergieanlagen ist.

24. Windpark nach Anspruch 23, **dadurch gekennzeichnet, daß**, wenn der Sollwert für mindestens eine Windenergieanlage auf den minimal möglichen Wert begrenzt ist, der Sollwert mindestens einer der anderen Windenergieanlagen verringert ist.


**Claims**

1. A method for operating a wind park with a plurality of wind turbines, each comprising a control unit, configured to control and/or adjust the wind turbine in response to a received desired value for an electric variable, the method comprising the following steps:

   • a superordinate control unit calculates and/or receives a currently permitted maximum value for the electric variable which the wind park is allowed to provide,
   • the superordinate control unit determines a desired value for the electric variable for each of the wind turbines and forwards the same to the wind turbines,

   **characterised in that**:

   • the superordinate control unit determines the desired value for each of the wind turbines depending on the currently maximum available values of all the wind turbines,
   • wherein the desired value for a wind turbine is determined as the currently maximum available value of the wind park, divided by the number of the wind turbines, weighted with the quotient of the currently maximum available value of the wind turbine and the arithmetic mean of the currently maximum available values of all the wind turbines of the wind park.

2. A method according to claim 1, **characterised in that** the superordinate control unit determines each desired value of one of the wind turbines depending on the currently maximum available value of the wind turbine and the preset currently maximum permitted value for the electric variable.

3. A method according to claim 1 or 2, **characterised in that** the desired values for each wind turbine are calculated when if the currently maximum available value of the wind park is smaller than or equal to the currently maximum permitted value of the wind park.

4. A method according to any one of claims 1 to 3, **characterised in that** the desired values for each wind turbine are calculated when the currently maximum available value of all the wind turbines is greater than or equal to the maximum permitted value.

5. A method according to any one of claims 1 to 4, **characterised in that** when the desired value of one of the wind turbines exceeds a threshold value of that wind turbine, the desired value for that wind turbine is limited to the threshold value of that wind turbine.

6. A method according to claim 5, **characterised in that** the difference between the unlimited desired value and the threshold value is distributed to one or more of the remaining wind turbines.

7. A method according to any one of claims 1 to 6, **characterised in that** a characteristic curve is provided for each of the wind turbines, in which the maximum available value of the wind turbine or of a group of wind turbines is provided depending on one or more external variables.

8. A method according to any one of claims 1 to 7, **characterised in that** the wind velocity and/or the wind direction is/are provided as the one or more external variables.

9. A method according to any one of claims 1 to 8, **characterised in that** the electric variable represents the active power and/or the active current of the wind turbine.

10. A method according to any one of claims 1 to 8, **characterised in that** the electric variable represents the reactive power and/or the reactive current.

11. A method according to any one of claims 1 to 8, **characterised in that** the electric variable represents the phase angle and/or the power factor.

12. A method according to any one of claims 1 to 8, **characterised in that** the electric variable represents the apparent power and/or the apparent current.

13. A method according to any one of claims 1 to 12, **characterised in that** a minimum available value is assigned to at least one of the wind turbines when the desired value determined by the superordinate control unit is smaller than the minimum available value of the at least one wind turbine.

14. A method according to claim 13, **characterised in that** when the desired value for at least one wind turbine is limited to the minimum available value, the desired value of at least one of the other wind turbines is decreased.

15. A wind park comprising a plurality of wind turbine, each comprising a control unit, configured to control and/or adjust the wind turbine in response to a received desired value for an electric variable, wherein the wind park comprises at least one superordinate control unit, configured to store a maximum permitted value for the electric variable provided by the wind park and to determine a desired value for the electric variable for each wind turbine and forward the determined desired value for the electric variable to the respective wind turbine,
**characterised in that**
the superordinate control unit determines each desired value for the wind turbines in dependence on the currently maximum available values of the wind turbines, wherein the superordinate control unit is configured to determine the desired value for a wind energy plant as the currently maximum available value of the wind park, divided by the number of the wind turbines, weighted with a quotient of the currently maximum available value of the wind turbine and the arithmetic mean of the currently maximum available values of all wind turbine of the wind park.

16. A wind park according to claim 15, **characterised in that** the superordinate control unit is configured to determine each desired value of one of the wind turbines depending on the currently maximum available value of the wind turbine and the preset permitted value for the electric variable.

17. A wind park according to claims 15 or 16, **characterised in that** a characteristic curve is provided for each of the wind turbines, in which the maximum available value of the electric variable of the wind turbines or of a group of wind turbines is provided depending on one or more external variables.

18. A wind park according to any one of claims 15 to 17, **characterised in that** the wind velocity and/or the wind direction is/are provided as the one or more external variables.

19. A wind park according to any one of claims 15 to 18, **characterised in that** the electric variable represents the active power and/or the active current of the wind turbine.

20. A wind park according to any one of claims 15 to 18, **characterised in that** the electric variable represents the reactive power and/or the reactive current.

21. A wind park according to any one of claims 15 to 18, **characterised in that** the electric variable represents the phase angle and/or the power factor.

22. A wind park according to any one of claims 15 to 18, **characterised in that** the electric variable represents the apparent power and/or the apparent current.

23. A wind park according to any one of claims 15 to 22, **characterised in that** a minimum available value is assigned to at least one of the wind turbines when the desired value determined by the superordinate control unit is smaller than the minimum available value of the at least one wind turbine.

24. A wind park according to claim 23, **characterised in that** when the desired value for at least one wind turbine is limited to the minimum available value, the desired value of at least one of the other wind turbines is decreased.


**Revendications**

1. Procédé de fonctionnement d'un parc éolien avec une multiplicité d'éoliennes qui présentent chacune une unité de commande qui peut piloter et/ou réguler l'éolienne en réaction à une valeur de consigne reçue pour une grandeur électrique, le procédé présentant les étapes suivantes :

   • une commande supérieure calcule et/ou reçoit une valeur actuellement admissible maximale pour la grandeur électrique que le parc éolien est autorisée à fournir,
   • la commande supérieure détermine pour chaque éolienne une valeur de consigne pour la grandeur électrique et transmet cette valeur aux éoliennes,

   **caractérisé en ce que**

   • la commande supérieure définit la valeur de consigne pour chacune des éoliennes en fonction de valeurs actuellement possibles maximales de toutes les éoliennes,
   • la valeur de consigne pour une éolienne etant définie en tant que valeur actuellement possible maximale du parc éolien, divisée par le nombre d'éoliennes, pondérée par le quotient de la valeur actuellement possible maximale de l'éolienne et de la valeur moyenne des valeurs actuellement possibles maximales de toutes les éoliennes.

2. Procédé selon la revendication 1, **caractérisé en ce que** la commande supérieure définit chaque valeur de consigne d'une des éoliennes en fonction de la valeur actuellement possible maximale de l'éolienne et de la valeur actuellement admissible maximale prédéfinie pour la grandeur électrique.

3. Procédé selon la revendication 1 ou 2, **caractérisé en ce que** les valeurs de consigne pour chaque éolienne sont calculées si la valeur actuellement possible maximale du parc éolien est inférieure ou égale à la valeur actuellement admissible maximale du parc éolien.

4. Procédé selon une des revendications 1 à 3, **caractérisé en ce que** les valeurs de consigne pour chaque éolienne sont calculées si la valeur actuellement possible maximale de toutes les éoliennes est supérieure ou égale à la valeur admissible maximale.

5. Procédé selon une des revendications 1 à 4, **caractérisé en ce que**, si la valeur de consigne d'une des éoliennes dépasse une valeur limite de cette éolienne, la valeur de consigne pour cette éolienne est limitée à la valeur limite de cette éolienne.

6. Procédé selon la revendication 5, **caractérisé en ce que** la différence entre la valeur de consigne non limitée et la valeur limite est répartie sur une ou plusieurs éoliennes restantes.

7. Procédé selon une des revendications 1 à 6, **caractérisé en ce que**, pour chacune des éoliennes, il est prévu une courbe caractéristique sur laquelle, en fonction d'une ou de plusieurs grandeurs externes, est portée la valeur possible maximale de l'éolienne ou d'un groupe d'éoliennes.

**8.** Procédé selon une des revendications 1 à 7, **caractérisé en ce que** la vitesse du vent et/ou la direction du vent est prévue en tant que grandeur externe.

**9.** Procédé selon une des revendications 1 à 8, **caractérisé en ce que** la grandeur électrique représente la puissance active et/ou le courant actif de l'éolienne.

**10.** Procédé selon une des revendications 1 à 8, **caractérisé en ce que** la grandeur électrique représente la puissance réactive et/ou le courant réactif.

**11.** Procédé selon une des revendications 1 à 8, **caractérisé en ce que** la grandeur électrique représente l'angle de phase et/ou le facteur de puissance.

**12.** Procédé selon une des revendications 1 à 8, **caractérisé en ce que** la grandeur électrique représente la puissance apparente et/ou le courant apparent.

**13.** Procédé selon une des revendications 1 à 12, **caractérisé en ce qu'**une valeur possible minimale est affectée à au moins une des éoliennes en tant que valeur de consigne si la valeur de consigne définie par la commande supérieure est inférieure à la valeur possible minimale d'au moins une des éoliennes.

**14.** Procédé selon la revendication 13, **caractérisé en ce que**, si la valeur de consigne pour au moins une éolienne est limitée à la valeur possible minimale, la valeur de consigne d'au moins une des autres éoliennes est réduite.

**15.** Parc éolien avec une multiplicité d'éoliennes qui présentent chacune une unité de commande qui peut piloter et/ou réguler l'éolienne en réaction à une valeur de consigne reçue pour une grandeur électrique, le parc éolien présentant au moins une commande supérieure qui peut enregistrer une valeur admissible maximale pour la grandeur électrique fournie par le parc éolien, la commande supérieure pouvant pour chaque éolienne déterminer une valeur de consigne pour la grandeur électrique et la transmettre à l'éolienne,
**caractérisée en ce que**
la commande supérieure définit chaque valeur de consigne pour l'éolienne en fonction de valeurs actuellement possibles maximales des éoliennes, la commande supérieure pouvant définir la valeur de consigne pour une éolienne en tant que valeur actuellement possible maximale du parc éolien divisée par le nombre d'éoliennes, pondérée par un quotient de la valeur actuellement possible maximale de l'éolienne et de la valeur moyenne de toutes les valeurs actuellement possibles maximales des éoliennes.

**16.** Parc éolien selon la revendication 15, **caractérisée en ce que** la commande supérieure définit chaque valeur de consigne d'une des éoliennes en fonction de la valeur possible maximale de l'éolienne et de la valeur admissible prédéfinie pour la grandeur électrique.

**17.** Parc éolien selon la revendication 15 ou 16, **caractérisée en ce que**, pour chacune des éoliennes, il est prévu une courbe caractéristique sur laquelle, en fonction d'une ou de plusieurs grandeurs externes, peut être portée la valeur possible maximale de la grandeur électrique de l'éolienne ou d'un groupe d'éoliennes.

**18.** Parc éolien selon une des revendications 15 à 17, **caractérisée en ce que**, en tant que grandeur externe, on utilise la vitesse du vent et/ou la direction du vent.

**19.** Parc éolien selon une des revendications 15 à 18, **caractérisée en ce que** la grandeur électrique représente la puissance active et/ou le courant actif de l'éolienne.

**20.** Parc éolien selon une des revendications 15 à 18, **caractérisée en ce que** la grandeur électrique représente la puissance réactive et/ou le courant réactif.

**21.** Parc éolien selon une des revendications 15 à 18, **caractérisée en ce que** la grandeur électrique représente l'angle de phase et/ou le facteur de puissance.

**22.** Parc éolien selon une des revendications 15 à 18, **caractérisée en ce que** la grandeur électrique représente la puissance apparente et/ou le courant apparent.

**23.** Parc éolien selon une des revendications 15 à 22, **caractérisée en ce qu'**une valeur possible minimale est affectée à au moins une des éoliennes en tant que valeur de consigne si la valeur de consigne définie par la commande supérieure est inférieure à la valeur possible minimale d'au moins une des éoliennes.

**24.** Parc éolien selon la revendication 23, **caractérisée en ce que**, si la valeur de consigne pour au moins une éolienne est limitée à la valeur possible minimale, la valeur de consigne d'au moins une des autres éoliennes est réduite.

Fig. 1

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6724097 B1
- WO 2007006565 A2
- US 20070090651 A1